# EUROPÄISCHE PATENTSCHRIFT

(11) **EP 0 642 306 B1**
(45) Veröffentlichungstag und Bekanntmachung des Hinweises auf die Patenterteilung: **20.03.1996**
(21) Anmeldenummer: 93919209.2
(22) Anmeldetag: 28.08.1993
(51) Int. Cl.: A22B 5/16, B26B 25/00

(54) **RUNDMESSERENTHÄUTER**
FLAYING TOOL WITH A REVOLVING BLADE
OUTIL DE DEPOUILLAGE A COUTEAU CIRCULAIRE

(30) Priorität: 01.09.1992 DE 4229134
(43) Veröffentlichungstag der Anmeldung: 15.03.1995
(73) Patentinhaber: SCHMID & WEZEL GmbH & Co., D-75433 Maulbronn (DE)
(72) Erfinder: ELMER, Stefan, D-75443 Ötisheim (DE)
(74) Vertreter: Dreiss, Hosenthien, Fuhlendorf & Partner
(86) Internationale Anmeldenummer: EP9302330
(87) Internationale Veröffentlichungsnummer: WO9405157

(56) Entgegenhaltungen:
- DE-C- 318 732
- DE-C- 392 115
- DE-C- 538 891
- DE-C- 674 322

## Beschreibung

Die Erfindung betrifft einen Rundmesserenthäuter mit einem Antriebsmotor, der über ein Getriebe ein in einem Messergehäuse zwischen zwei Gehäuseschalen drehbar geführtes Rundmesser antreibt.

Aus der DE-PS 392 115 ist ein solcher Rundmesserenthäuter bekannt, bei dem das Getriebe ein Kegelradgetriebe ist, durch das das Rundmesser direkt angetrieben wird. Die Lagerung und Anordnung der Kegelräder erfordern eine große Bauhohe. Das Rundmesser ist exzentrisch zum Griff angeordnet. Die bei der Arbeit auftretenden Kippmomente durch die Asymmertie erschweren die Arbeit.

Aus der DE-PS 538 891 ist noch ein Schneckenantrieb bekannt. Dieser Antrieb ist sehr voluminös und es ist auch hier das Messer stark asymmertisch angeordnet.

Eine symmetrische Messeranordnung ist aus der DE-PS 674 322 bekannt. Es weist ein im Durchmesser sehr großes das Rundmesser tragendes Kegelrad auf, dessen Herstellung aufwendig ist. Insbesondere ist hier auch ein großes Volumen verbunden mit hohem Konstruktionsgewicht erforderlich.

In Vermeidung der geschilderten Nachteile liegt der vorliegenden Erfindung die Aufgabe zugrunde, einen leicht handhabbaren flachen Rundmesserenthäuter zu schaffen, der bei geringem Konstruktionsgewicht und geringem Bauvolumen besonders laufruhig und geräuscharm ist.

Die Lösung dieser Aufgabe erfolgt durch die Realisierung der kennzeichnenden Merkmale des Anspruchs 1.

Durch die Verwendung eines Riementriebs wird eine flache Bauweise ermöglicht. Der elastische Riementrieb fängt Schwingungen ab, so daß ein ermüdungsfreies Arbeiten bei geringem Arbeitsgeschräusch ermöglicht wird.

Zum einfachen und raschen Messerwechsel kann das Messerträgerrad mindestens einen, vorzugsweise mehrere am Umfang verteilt angeordnete Mitnehmer aufweisen, wobei als Mitnehmer die Köpfe von Zylinderschrauben dienen können, die in Durchbrüchen das Rundmesser durchragen.

Konstruktiv besonders einfach kann das Messerträgerrad eine auf einem Lagerbolzen drehbar gelagerte Nabe aufweisen, wobei über diese Nabe direkt oder über ein aufgesetztes Riemenrad der Riemen des Riementriebs geführt ist. Gewichtsparend kann der Lagerbolzen in einer der Gehäuseschalen fest eingepreßt sein, und es kann die andere Gehäuseschale über eine Spannschraube im exakten Abstand verschraubt sein, wobei der exakte Abstand der Gehäuseschalen durch Anlageflächen von Lagerbolzen und Gehäuseschale festgelegt ist, so daß auch bei fester Vorspannung das Rundmesser frei ohne Klemmen umlaufen kann, aber doch gewährleistet ist, daß der Führungsspalt zwischen den Gehäuseschalen und dem Rundmesser relativ klein ist, um ein Eindringen von Fremdstoffen nach Möglichkeit zu vermeiden.

Eine besonders gute Rundmesserführung kann dadurch erreicht werden, daß die Lagerschalen mindestens teilweise konzentrisch zum Lagerbolzen und im Abstand davon umlaufende Führungsleisten aufweisen.

Eine einfache Reinigung und ein einfacher Messeraustausch kann dadurch ermöglich werden, daß das Rundmesser nach Lösen der Spannschraube und Abnehmen der Gehäuseschalen leicht austauschbar ohne besondere Befestigung auf dem Messerträgerrad aufliegt.

Ein ruhiger Lauf des Antriebsrads kann dadurch erreicht werden, daß dieses zusammen mit einem Kegelrad zwischen zwei im Messergehäuse angeordneten Lagern drehbar gelagert ist, wobei das Kegelrad mit einem vom Antriebsmotor angetriebenen zweiten Kegelrad zusammenwirkt. Dies ermöglicht einen gedrungenen, Platz und Konstruktionsgewicht einsparenden Aufbau.

Eine besonders exakte Lagerung und damit verbundene Laufruhe kann dadurch erreicht werden, daß der Antriebsmotor mit dem zweiten Kegelrad und das dem ersten Kegelrad nahe Lager in einem einstückig miteinander verbundenen Teil des Messergehäuses aufgenommen sind. Die Bearbeitungstoleranzen können so mit geringstem Aufwand klein gehalten werden.

Konstruktionsgewicht und Bauvolumen sparend kann der einstückige Gehäuseteil des Messergehäuses einstückig in einer Mittelwand weitergeführt sein, wobei dann die den Lagerbolzen tragende Gehäuseschale mit dieser Mittelwand verschraubt ist und in dieser Gehäuseschale kann auch eines der Lager für das Antriebsrad angeordnet sein.

Zur Übertragung auch großer Schnittkräfte kann der Riementrieb ein Zahnriementrieb sein, wobei das Antriebsrad und das Messerträgerrad an ihrem Umfang entsprechende Verzahnungen aufweisen.

Weitere erfindungsgemäße Ausbildungen sind den Unteransprüchen zu entnehmen und werden mit ihren Vorteilen anhand der beigefügten Zeichnungen näher erläutert. Es Zeigt:

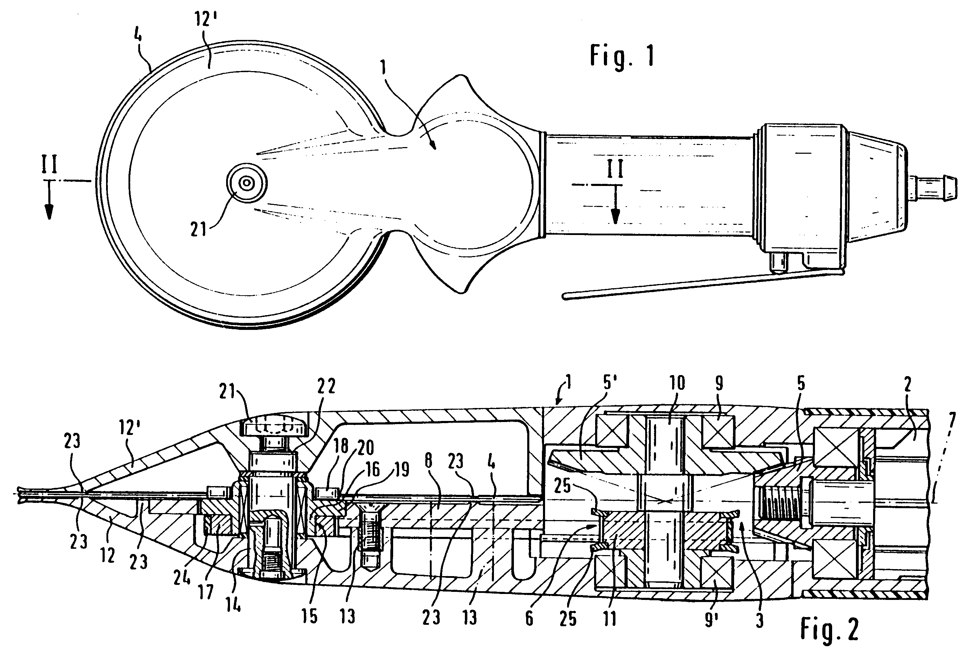

- Figur 1: eine Draufsicht auf einen Rundmesserenthäuter; und
- Figur 2: einen Teilschnitt entlang der Linie II-II in Figur 1 in größerem Maßstab.

In einem handgriffartig rund ausgebildeten Teil eines Messergehäuses 1 ist ein Antriebsmotor 2 angeordnet, der über ein Getriebe 3 ein Rundmesser 4 antreibt. Das Getriebe 3 besteht aus einem Zwei Kegelräder 5,5' aufweisenden Kegelradgetriebe und einem anschließenden Riementrieb 6. Das Kegelrad 5 ist direkt auf der Abtriebswelle des Antriebsmotors 2 fluchtend zur Drehachse 7 vorgesehen. Das Kegelrad 5' ist auf einer über Lager 9,9' gelagerten Welle 10 mit einem Antriebsrad 11 gekoppelt. Das Lager 9 ist im Messergehäuse 1 gelagert, in dem auch der Antriebsmotor 2 angeordnet ist, so daß bei einfacher Bearbeitung geringe Herstellungstoleranzen für die exakte Lagerung der Kegelräder 5,5' eingehalten werden können. Das Lager 9' ist in einer Gehäuseschale 12 angeordnet, die mit einer Mittelwand 8 des Messergehäuses 1 durch mehrere Schrauben 13 verbunden ist.

In der Gehäuseschale 12 ist mit Abstand vom Lager 9' ein Lagerbolzen 14 eingepreßt, auf dem ein Messerträgerrad 15 des Riementriebs 6 drehbar gelagert ist. Das Messerträgerrad 15 besteht aus einer Nabe 16 und einem Zahnriemenrad 17, das über Zylinderschrauben 18 mit einem Bund 19 der Nabe 16 verschraubt ist.

Das Rundmesser 4 hat am Umfang verteilt Durchbrüche 20, die von den Köpfen der Zylinderschrauben 18 durchragt sind.

Auf dem freien Ende des Lagerbolzens 14 ist eine weitere Gehäuseschale 12' durch eine Spannschraube 21 leicht abnehmbar gehalten. Die Gehäuseschale 12' und der Lagerbolzen 14 sind abmessungsgenau mit Anlageflächen 22 versehen, durch die gewährleistet ist, daß bei festgespannter Spannschraube 21 das zwischen den Gehäuseschalen 12,12' und der Mittelwand 8 angeordnete Rundmesser 4 ohne Klemmen rundlaufen kann, daß aber nur ein geringer Zwischenspalt bleibt, so daß Fremdstoffe möglichst nicht zwischen die Gehäuseschalen 12,12' eindringen. Zur besseren Messerführung können konzentrisch zum Lagerbolzen 14 an den Gehäuseschalen 12,12' und der Mittelwand 8 Führungsleisten 23 vorgesehen sein.

Das Rundmesser 4 liegt fluchtend zur Drehachse 7, so daß bei einer Handhabung keine Kippmomente auftreten. Der Riementrieb 6 ist zur Übertragung auch großer Schnittkräfte ein Zahnriementrieb mit einem Zahnriemen 24, wobei das Messerträgerrad 15 und das Antriebsrad 11 eine entsprechende angepaßte Verzahnung aufweisen. Zur Seitenführung kann das Antriebsrad 11 mit zwei Seitenborden 25 versehen sein.

Zum Reinigen und zum Austausch des Rundmessers 4 ist nur das Lösen einer einzigen Spannschraube 21 erforderlich, so daß eine zeitsparende Wartung und Reinigung möglich ist.

## Patentansprüche

1. Rundmesserenthäuter mit einem Antriebsmotor (2), der über ein Getriebe (3) ein in einem Messergehäuse (1) zwischen zwei Gehäuseschalen (12,12') drehbar geführtes Rundmesser (4) antreibt, **dadurch gekennzeichnet**, daß das Getriebe (3) einen Riementrieb (6) aufweist mit einem vom Antriebsmotor (2) direkt oder indirekt angetriebenen Antriebsrad (11) und einem über einen Riemen (24) angetriebenen, zwischen den Gehäuseschalen (12,12') drehbar gelagerten Messerträgerrad (15) und daß ferner das Rundmesser (4) und die Drehachse des Antriebsmotors (2) in einer Ebene liegen.

2. Rundmesserenthäuter nach Anspruch 1, dadurch gekennzeichnet, daß das Messerträgerrad (15) mindestens einen, vorzugsweise mehrere am Umfang verteilt angeordnete Mitnehmer aufweist.

3. Rundmesserenthäuter nach Anspruch 2, dadurch gekennzeichnet, daß als Mitnehmer die Köpfe von Zylinderschrauben (18) dienen, die in Durchbrüchen (20) das Rundmesser (4) durchragen.

4. Rundmesserenthäuter nach einem der Ansprüche 1 bis 3, dadurch gekennzeichnet, daß das Messerträgerrad (15) eine auf einem Lagerbolzen (14) drehbar gelagerte Nabe (16) aufweist, und daß über diese Nabe (16), direkt oder über ein aufgesetztes Riemenrad (17), der Riemen (24) des Riementriebs (6) geführt ist.

5. Rundmesserenthäuter nach Anspruch 3 und 4, dadurch gekennzeichnet, daß auf der Nabe (16) das Riemenrad (17) auf einem Absatz aufgenommen und über am Umfang verteilt, einen Bund (19) der Nabe (16) durchdringende, Zylinderschrauben (18) gehalten ist.

6. Rundmesserenthäuter nach Anspruch 4, dadurch gekennzeichnet, daß der Lagerbolzen (14) in einer der Gehäuseschalen (12) fest eingepreßt ist und die andere Gehäuseschale (12') über eine Spannschraube (21) im exakten Abstand verschraubt ist, und daß der Abstand der Gehäuseschalen (12,12') durch Anlageflächen (22) von Lagerbolzen (14) und Gehäuseschale (12') festgelegt ist.

7. Rundmesserenthäuter nach einem der Ansprüche 1 bis 6, dadurch gekennzeichnet, daß die Gehäuseschalen (12,12') mindestens teilweise konzentrisch zum Lagerbolzen (14) und im Abstand davon umlaufende Führungsleisten (23) für das Rundmesser (4) aufweisen.

8. Rundmesserenthäuter nach Anspruch 6, dadurch gekennzeichnet, daß das Rundmesser (4) nach Lösen der Spannschraube (21) und Abnehmen der Gehäuseschale (12') leicht austauschbar ohne besondere Befestigung auf dem Messerträgerrad (15) aufliegt.

9. Rundmesserenthäuter nach Anspruch 1, dadurch gekennzeichnet, daß das Antriebsrad (11) des Riementriebs (6) zusammen mit einem Kegelrad (5') zwischen zwei im Messergehäuse (1) angeordneten Lagern (9,9') drehbar gelagert ist, und daß das Kegelrad (5') mit einem vom Antriebsmotor (2) angetriebenen zweiten Kegelrad (5) zusammenwirkt.

10. Rundmesserenthäuter nach Anspruch 9, dadurch gekennzeichnet, daß der Antriebsmotor (2) mit dem zweiten Kegelrad (5) und das dem ersten Kegelrad (5') nahe Lager (9) in einem einstückig miteinander verbundenen Teil des Messergehäuses (1) aufgenommen sind.

11. Rundmesserenthäuter nach Anspruch 10, dadurch gekennzeichnet, daß der einstückige Gehäuseteil des Messergehäuses (1) einstückig in einer Mittelwand (9) weitergeführt ist, und daß die den Lagerbolzen (14) tragende Gehäuseschale (12) mit dieser Mittelwand (9) verschraubt ist, und daß in dieser Gehäuseschale (12) auch eines der Lager (9') für das Antriebsrad (11) vorgesehen ist.

12. Rundmesserenthäuter nach einem der Ansprüche 1 bis 11, dadurch gekennzeichnet, daß der Riementrieb (6) einen Zahnriemen (24) aufweist, und daß das Antriebsrad (11) und das Messerträgerrad (15) an ihrem Umfang angepaßte Verzahnungen aufweisen.

13. Rundmesserenthäuter nach Anspruch 12, dadurch gekennzeichnet, daß das Antriebsrad (11) mit zwei Seitenborden (25) für die Riemenführung versehen ist.

## Claims

1. A flaying tool with a revolving blade which has a driving motor (2) which drives a rotary guided revolving blade (4) mounted between two halves (12,12') of a blade housing (1) by means of a mechanism (3), **characterised in that** the mechanism (3) has a belt drive (6) with a driving wheel (11) directly or indirectly driven by the driving motor (2) and a blade bearing wheel (15) rotatably mounted between the housing halves (12,12') and driven by a belt (24) and in that furthermore the revolving blade (4) and the axis of revolution of the driving motor (2) are within the one plane.

2. A flaying tool with a revolving blade as claimed in Claim 1, characterised in that the blade bearing wheel (15) has at least one and preferentially several drivers arranged distributed about its circumference.

3. A flaying tool with a revolving blade as claimed in Claim 2, characterised in that the heads of cheese head screws (18) which pass through openings (20) in the revolving blade (4) serve as drivers.

4. A flaying tool with a revolving blade as claimed in any of claims 1 to 3, characterised in that the blade bearing wheel (15) has a hub (16) mounted rotatably on a bearing pin (14) and in that the belt (24) of the belt drive (6) is driven by means of this hub (16) directly or by means of an attached belt wheel (17).

5. A flaying tool with a revolving blade as claimed in Claim 3 and 4, characterised in that the belt wheel (17) is located on a shoulder on the hub (16) and held by means of cheese head screws (18) distributed about the circumference and penetrating a collar (19) of the hub (16).

6. A flaying tool with a revolving blade as claimed in Claim 4, characterised in that the bearing pin (14) is permanently press-fitted into one of the housing halves (12) and the other housing half (12') is screwed on at an exact clearance by means of a clamping screw (21) and in that the clearance between the housing halves (12,12') is defined by bearing surfaces (22) of bearing pin (14) and housing half (12').

7. A flaying tool with a revolving blade as claimed in any of claims 1 to 6, characterised in that the housing halves (12,12') have guide beads (23) for the revolving blade (4) at least partially concentric with the bearing pin (14) and revolving at a clearance from same.

8. A flaying tool with a revolving blade as claimed in Claim 6, characterised in that after undoing the clamping screw (21) and removing the housing half (12'), the revolving blade (4) rests easily changeable without special fastening on the blade bearing wheel (15).

9. A flaying tool with a revolving blade as claimed in Claim 1, characterised in that the driving wheel (11) of the belt drive (6) is rotatably mounted together with a bevel gear (5') between two bearings (9,9') arranged in the blade housing (1) and in that the bevel gear (5') operates together with a second bevel gear (5) driven by the driving motor (2).

10. A flaying tool with a revolving blade as claimed in Claim 9, characterised in that the driving motor (2) with the second bevel gear (5) and the bearing (9) adjacent to the first bevel gear (5') are accommodated in a part of the blade housing (1) which is connected together as one piece.

11. A flaying tool with a revolving blade as claimed in Claim 10, characterised in that the one-piece housing part of the blade housing (1) is continued in one piece in a centre wall (8) and in that the housing half (12) in which the bearing pin (14) is mounted is screwed to this centre wall (8) and in that one of the bearings (9') for the driving wheel (11) is also provided in this housing half (12).

12. A flaying tool with a revolving blade as claimed in any of claims 1 to 11, characterised in that the belt drive (6) has a toothed belt (24) and in that the driving wheel (11) and the blade bearing wheel (15) have matched teeth about their circumference.

13. A flaying tool with a revolving blade as claimed in Claim 12, characterised in that the driving wheel (11) is provided with two side rims (25) for belt guidance.

## Revendications

1. Outil de dépouillage à couteau circulaire comportant un moteur de commande (2), qui actionne un couteau circulaire (4) guidé de façon rotative dans un boîtier de couteau (1) entre deux coques de boîtier (12, 12'), caractérisé en ce que l'engrenage (3) présente une commande à courroie (6) comportant un pignon menant (11) actionné directement ou indirectement par le moteur de commande (2) et une roue porte-lame (15) logée de façon rotative entre les coques de boîtier (12, 12') et en ce qu'en outre le couteau circulaire (4) et l'axe de rotation du moteur de commande (2) se trouvent dans un plan.

2. Outil de dépouillage à couteau circulaire selon la revendication 1, caractérisé en ce que la roue porte-lame (15) présente au moins un, de préférence plusieurs tenons d'entraînement disposés en étant répartis sur la périphérie.

3. Outil de dépouillage à couteau circulaire selon la revendication 2, caractérisé en ce que les têtes des vis à tête cylindrique (18) servent de tenons d'entraînement, qui élèvent le couteau circulaire (4) au travers d'ouvertures (20).

4. Outil de dépouillage à couteau circulaire selon l'une des revendications 1 à 3, caractérisé en ce que la roue porte-lame (15) présente un moyeu (16) logé de façon rotative sur un boulon à coussinet (14), et en ce que la courroie (24) de la commande à courroie (6) est guidée par l'intermédiaire de ce moyeu (16) directement ou par l'intermédiaire d'une roue à courroie (17) rapportée.

5. Outil de dépouillage à couteau circulaire selon les revendications 3 et 4, caractérisé en ce que sur le moyeu (16), la roue à courroie (17) est logée sur un gradin et est maintenue par l'intermédiaire de vis à tête cylindrique (18) réparties sur la périphérie et pénétrant un collet de butée (19) du moyeu (16).

6. Outil de dépouillage à couteau circulaire selon la revendication 4, caractérisé en ce que le boulon à coussinet (14) est solidement enfoncé dans une des coques de boîtier (12) et l'autre coque de boitier (12') est vissée par l'intermédiaire d'une vis de tension (21) dans un écart exact, et on ce que l'écart des coques de boîtier (12, 12') est fixé par des faces de départ (22) du boulon à coussinet (14) et de la coque de boîtier (12').

7. Outil de dépouillage selon l'une des revendications 1 à 6, caractérisé en ce que les coques de boîtier (12, 12') présentent au moins de façon partiellement concentrique par rapport au boulon à coussinet (14) et à distance de celui-ci, des barres conductrices rotatives (23) pour le couteau circulaire (4).

8. Outil de dépouillage selon la revendication 6, caractérisé en ce que le couteau circulaire (4) après dévissage de la vis de tension (21) et enlèvement de la coque de boîtier (12') est posé sans fixation particulière sur la roue porte-lame (15) et peut être facilement remplacé.

9. Outil de dépouillage selon la revendication 1, caractérisé en ce que le pignon menant (11) de la commande à courroie (6) est logé de façon rotative, conjointement avec un pignon conique (5'), entre deux paliers (9, 9') disposés dans un boitier de couteau (1) et en ce que le pignon conique (5') interagit avec un deuxième pignon conique (5) actionné par le moteur de commande (2).

10. Outil de dépouillage selon le revendication 9, caractérisé en ce que le moteur de commande (2) comportant le deuxième pignon conique (5) et le palier (9) proche du premier pignon conique (5') sont logés en étant reliés ensemble d'un seul tenant dans une partie du boitier de couteau (1).

11. Outil de dépouillage selon la revendication 10, caractérisé en ce que la partie de boîtier d'un seul tenant du boîtier dc couteau (1) se prolonge d'un seul tenant dans une paroi médiane (9), et en ce que la coque de boîtier (12) portant le boulon à coussinet (14) est vissée avec cette paroi médiane (9), et en ce que dans cette coque de boîtier (12) est également prévu un des paliers (9') pour le pignon menant (11).

12. Outil de dépouillage selon l'une des revendications 1 à 11, caractérisé en ce que la commande à courroie (6) présente une courroie dentée (24), et en ce que le pignon menant (11) et la roue porte-lame (15) présentent sur leur périphérie des dentures adaptées.

13. Outil de dépouillage selon la revendication 12, caractérisé en ce que le pignon menant (11) est pourvu de deux bords latéraux (25) pour le guide-courroie.
